# EUROPEAN PATENT APPLICATION

(11) **EP 4 835 589 A1**
(43) Date of publication of application: **04.11.2026**
(21) Application number: 24912911.5
(22) Date of filing: 25.12.2024
(51) Int. Cl.: G05B 11/36, G05B 11/32, G05B 13/02, G05B 13/04, G06F 17/16

(54) **ESTIMATION SYSTEM, ESTIMATION METHOD, AND PROGRAM**

(30) Priority: 25.12.2023 JP 2023218560; 27.06.2024 JP 2024103716
(71) Applicant: NATIONAL UNIVERSITY CORPORATION YOKOHAMA NATIONAL UNIVERSITY, Yokohama-shi Kanagawa 240-8501 (JP)
(72) Inventor: FUJIMOTO, Yasutaka, Yokohama-shi, Kanagawa 240-8501 (JP); KAMEYA, Naoki, Yokohama-shi, Kanagawa 240-8501 (JP)
(74) Representative: Michalski Hüttermann & Partner mbB
(86) International application number: PCT/JP2024/045915
(87) International publication number: WO 2025/143025

(57) **Abstract**

An output of a control object is estimated without limiting the number of types of input data. Provided is an estimation system for estimating an output of a control object based on experimental data acquired by a closed-loop control system that outputs output data corresponding to input data from a control device to the control object and feeds back the output data to the control device, the estimation system including: an experimental data storage unit configured to store the experimental data; an input module configured to receive an input of any input data; and a calculation module configured to calculate estimated output data.

## Description

### Technical Field

The present invention relates to an estimation system, an estimation method, and a program.

### Background Art

Hitherto, a control system using a physical model of a control object has been known. However, it is difficult to accurately generate the physical model of the control object, and a generation cost thereof is high. In view of this, the inventors of the present application have proposed a convolution-based data-driven simulation (CDDS) method that estimates an output without using the physical model of the control object, as disclosed in Non Patent Literature 1 below.

### Citation List

### Non Patent Literature

[NPL 1] Naoki Kameya, Yasutaka Fujimoto, Yu Hosoyamada, and Toyoaki Suenaga, "Convolution-Based Data-Driven Simulation and Controller Design Method," IEEE TRANSACTIONS ON INDUSTRIAL ELECTRONICS, pages: 1-10, 2023

### Technical Problem

Here, in the above-mentioned method of Non Patent Literature 1, an application range is limited to a case in which the number of types of input data to the control object is one.

### Summary of the Invention

An object of the present invention is to provide an estimation system, an estimation method, and a program that are capable of estimating an output of a control object without limiting the number of types of input data.

In order to solve the above-mentioned problem, the invention disclosed in the present application has various aspects, and an outline of representative ones of those aspects is as follows.
(1) An estimation system for estimating an output of a control object based on experimental data acquired by a closed-loop control system that outputs output data corresponding to input data from a control device to the control object and feeds back the output data to the control device, the estimation system including: an experimental data storage unit configured to store the experimental data; an input module configured to receive an input of any input data; and a calculation module configured to calculate estimated output data based on Math 1 and Math 2. [Math 1] $\hat{y} \left(k\right) = {\sum }_{i = 0}^{k} {y}^{˜} \left(k-i\right) v \left(i\right)$ [Math 2] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
   ŷ: estimated output data
   û: input data
   *ỹ*: experimental output data
   *ũ*: experimental input data
   v: intermediate variable
   *ũ*(0)^{†}: pseudoinverse of *ũ*(0)
   k: discrete time
   i: internal variable of discrete time
(2) The estimation system according to Item (1), wherein the number of types of the input data input to the control object is two or more.
(3) An estimation method of estimating an output of a control object based on experimental data acquired by a closed-loop control system that outputs output data corresponding to input data from a control device to the control object and feeds back the output data to the control device, the estimation method including the steps of: storing the experimental data; receiving an input of any input data; and calculating estimated output data based on Math 3 and Math 4. [Math 3] $\hat{y} \left(k\right) = {\sum }_{i = 0}^{k} {y}^{˜} \left(k-i\right) v \left(i\right)$ [Math 4] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
   ŷ: estimated output data
   û: input data
   *ỹ*: experimental output data
   *ũ*: experimental input data
   v: intermediate variable
   *ũ*(0)^{†}: pseudoinverse of ũ(0)
   k: discrete time
   i: internal variable of discrete time
(4) A program for estimating an output of a control object based on experimental data acquired by a closed-loop control system that outputs output data corresponding to input data from a control device to the control object and feeds back the output data to the control device, the program causing a computer to execute the steps of: storing the experimental data; receiving an input of any input data; and calculating estimated output data based on Math 5 and Math 6. [Math 5] $\hat{y} \left(k\right) = {\sum }_{i = 0}^{k} {y}^{˜} \left(k-i\right) v \left(i\right)$ [Math 6] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
   ŷ: estimated output data
   û: input data
   *ỹ*: experimental output data
   *ũ*: experimental input data
   v: intermediate variable
   *ũ*(0)^{†}: pseudoinverse of ũ(0)
   k: discrete time
   i: internal variable of discrete time

### Advantageous Effects of Invention

According to the aspects of Items (1) to (4), it is possible to estimate the output of the control object without limiting the number of types of the input data.

### Brief Description of Drawings

FIG. 1 is a block diagram for illustrating a hardware configuration of an estimation system according to an embodiment of the present invention.
FIG. 2 is a functional block diagram for illustrating functions implemented in an estimation device.
FIG. 3 is a flow chart for illustrating calculation processing for estimated output data.
FIG. 4 is a block diagram for illustrating an example in which an output 1 and an output 2 are output when an input 1 and an input 2 are input to a control object having a transfer function matrix represented by P(z).
FIG. 5 shows an example of experimental data.
FIG. 6 shows an example of estimation results using the experimental data shown in FIG. 5.
FIG. 7A is a view for illustrating a two-inertia actuator with two inputs and two outputs.
FIG. 7B is a block line diagram in another simulation in the embodiment.
FIG. 7C shows graphs of an example of experimental data.
FIG. 7D shows an example of estimation results using the experimental data shown in FIG. 7C.
FIG. 8 is a functional block diagram for illustrating functions implemented in a parameter adjustment device.
FIG. 9 is a block line diagram for illustrating an example of a data-driven model and a reference model.
FIG. 10A is a block line diagram for illustrating an example of a case in which, instead of being matched with the reference model, closed-loop characteristics are matched with a corresponding reference model.
FIG. 10B is a block line diagram for illustrating an example of a case in which a feedback signal is replaced with an output of the reference model.
FIG. 11 shows response graphs of Data Acquisition Experiment 1.
FIG. 12 shows response graphs of Data Acquisition Experiment 2.
FIG. 13 is a table for showing obtained control gains.
FIG. 14 shows graphs of a reference trajectory and a response in a case in which control is performed through use of the obtained control gains.

### Detailed Description of Embodiments

Now, an embodiment of the present invention (hereinafter referred to as "this embodiment") is described in detail with reference to the accompanying drawings.

### [Overview]

An estimation system 1 according to this embodiment employs a data-driven simulation (CDDS) method based on a time-domain convolution operation using experimental data of inputs and outputs to/from a control object (plant) 30 in a discrete-time closed-loop control system, and estimates an output of the multi-input, multi-output (multi-in, multi-out: MIMO) control object 30. In the estimation system 1, it is possible to estimate the output in the control object 30 without using a physical model of the control object 30. In addition, the estimation system 1 is a simulation system using only the control object 30, and hence a nonlinear controller in which an input-output relationship is nonlinear is also applicable as a control device 20.

As an application example of the estimation system 1, for example, a multi-axis robot such as a manipulator is used as the control object 30. When the multi-axis robot is employed as the control object 30, it is preferred that data regarding a current value or the like supplied to each motor for driving a corresponding axis be input as input data, and data regarding a rotational position, an angular velocity, a rotational torque, or the like in each motor for driving a corresponding axis be output as output data.

### [Hardware Configuration]

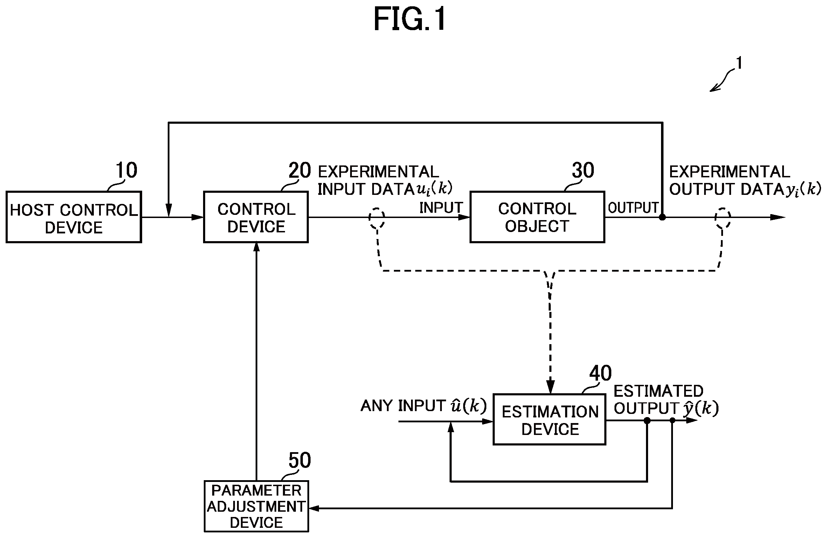

FIG. 1 is a block diagram for illustrating a hardware configuration of an estimation system according to this embodiment. As illustrated in FIG. 1, the estimation system 1 includes a closed-loop control system that acquires output data corresponding to input data from the control device (controller) 20 to the control object 30 and feeds back the output data to the control device 20. It is preferred that the control device 20 be driven by a command from a host control device 10.

An estimation device 40 is a device that estimates an output through use of the experimental data of the inputs and outputs of the control object 30. The estimation device 40 is a computer including at least one or more processors. The estimation device 40 includes at least one of a volatile memory or a non-volatile memory, and a program stored in the memory is executed by the processor. It is preferred that the estimation device 40 include at least one of a communication interface for wired communication or a communication interface for wireless communication. The program stored in the estimation device 40 may be supplied through a network. In addition, the estimation device 40 may include a reading unit (for example, a memory card slot) that reads a computer-readable information storage medium, or an input/output unit (for example, a USB terminal) for allowing connection to an external device. In this case, the program stored in the information storage medium may be supplied through the reading unit or the input/output unit.

The hardware configuration illustrated in FIG. 1 is an example, and the present invention is not limited thereto. It is preferred that the estimation system 1 include at least one or more computers. In addition, for example, the estimation device 40 may include two or more computers.

### [Functions Implemented in Estimation System]

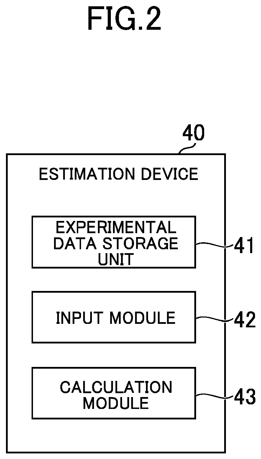

FIG. 2 is a functional block diagram for illustrating functions implemented in the estimation device. The estimation device 40 includes an experimental data storage unit 41, an input module 42, and a calculation module 43. The input module 42 and the calculation module 43 are mainly implemented by the processor included in the estimation device 40. The experimental data storage unit 41 is mainly implemented by the memory included in the estimation device 40.

The experimental data storage unit 41 stores the experimental data regarding the inputs and outputs of the control object 30 in the closed-loop control system illustrated in FIG. 1. It is preferred that the experimental data storage unit 41 store experimental input data and experimental output data for "r" experiments. Any input data is input to the input module 42. The calculation module 43 calculates estimated output data based on Expression (11-1) and Expression (13), which are described later.

### [Estimation of Output Data]

In this embodiment, the number of pieces of input data is set as "m", and the number of pieces of output data is set as "p". The variables "m" and "p" are natural numbers of 1 or more. Further, in this embodiment, a discrete system with the number "r" of experiments and a time k=0, 1, ..., T is used, and an estimated output y(k) in a time domain is obtained by introducing an r-dimensional vector V(z) as an intermediate variable into a relationship between any input and an estimated output and a relationship of the experimental data therewith. The term "experimental data" refers to experimental input data and experimental output data obtained by actually driving the control object 30. In each of the following mathematical expressions, any input data and the estimated output data obtained through estimation in accordance with the input data are represented by attaching a hat symbol "^" to parameters indicating those pieces of data. In addition, in each of the following mathematical expressions, input data and output data regarding experiments are represented by attaching a tilde symbol "~" to parameters indicating those pieces of data.

Assuming that the time k is 0, 1, ..., T, when the input data input to the control object 30 in a j-th experiment is represented by an m-dimensional vector and output data obtained at that time is represented by a p-dimensional vector, the input data and the output data are associated by Expression (1). Further, a Z-transform of the input data is represented by Expression (2-1), and a Z-transform of the output data is represented by Expression (2-2). Here, Uⱼ(z) is the input data, Yⱼ(z) is the output data, and P(z) is a transfer function matrix representing a physical model of the control object 30 which has "m" inputs and "p" outputs. In addition, it is assumed that the total number of experiments is "r", and "r" is "m" or more.
[Math 1] ${Y}_{j} \left(z\right) = P \left(z\right) {U}_{j} \left(z\right) , j = 1 , 2 , … , r$ (1) [Math 2] $\begin{matrix}{U}_{j} \left(z\right) = Z \left\{{u}_{j}\left(k\right)\right\} \left(2-1\right) \\ {Y}_{j} \left(z\right) = Z \left\{{y}_{j}\left(k\right)\right\} \left(2-2\right)\end{matrix}$

A relationship between experimental input data U tilde and experimental output data Y tilde for "r" experiments of Expression (1) can be represented by Expression (3) when summarized into a matrix format. In this case, the experimental input data of Expression (3) is set as a matrix represented by Expression (4-1) or Expression (4-3), and the experimental output data is set as a matrix represented by Expression (4-2) or Expression (4-4).
[Math 3] ${Y}^{˜} \left(z\right) = P \left(z\right) {U}^{˜} \left(z\right)$ (3) [Math 4] $\begin{matrix}{U}^{˜} \left(z\right) = \left[{U}_{1}\left(z\right){U}_{2}\left(z\right) ⋯ {U}_{r}\left(z\right)\right] \left(4-1\right) \\ {Y}^{˜} \left(z\right) = \left[{Y}_{1}\left(z\right){Y}_{2}\left(z\right) ⋯ {Y}_{r}\left(z\right)\right] \left(4-2\right) \\ {u}^{˜} \left(k\right) = \left[{u}_{1}\left(k\right) {u}_{2}\left(k\right) ⋯ {u}_{r}\left(k\right)\right] \left(4-3\right) \\ {y}^{˜} \left(k\right) = \left[{y}_{1}\left(k\right) {y}_{2}\left(k\right) ⋯ {y}_{r}\left(k\right)\right] \left(4-4\right)\end{matrix}$

Here, the estimated output data obtained when any input data is given at the time "k" can be represented by Expression (5). Input data U hat is a Z-transform of any input data u hat, and is represented by Expression (6-1). In addition, output data Y hat is a Z-transform of estimated output data y hat, and is represented by Expression (6-2).
[Math 5] $\hat{Y} \left(z\right) = P \left(z\right) \hat{U} \left(z\right)$ (5) [Math 6] $\begin{matrix}\hat{U} \left(z\right) = Z \left\{\hat{u}\left(k\right)\right\} \left(6-1\right) \\ \hat{Y} \left(z\right) = Z \left\{\hat{y}\left(z\right)\right\} \left(6-2\right)\end{matrix}$

Here, the r-dimensional vector V(z), which is an intermediate variable satisfying Expression (7), is introduced. Further, when Expression (7), which is an intermediate variable introduction expression, is expressed in a time domain by performing a time-domain convolution operation, Expression (8) is obtained. The symbol "*" is a convolution operator in the discrete time. The input data u hat in the time domain is associated by an inverse Z-transform and is assumed to be represented by Expression (9-1). Further, a vector v(k) in the time domain is associated by an inverse Z-transform and is assumed to be represented by Expression (9-2). The bold R in Expression (9-1) and Expression (9-2) represents a real space, R^{m×r} (R is bold) represents an m-by-r matrix, and R^{r} (R is bold) represents an r-dimensional vector.
[Math 7] $\hat{U} \left(z\right) = {U}^{˜} \left(z\right) V \left(z\right)$ (7) [Math 8] $\hat{u} \left(k\right) = {u}^{˜} \left(k\right) ∗ v \left(k\right)$ (8) [Math 9] $\begin{matrix}{u}^{˜} \left(k\right) = {Z}^{- 1} \left\{{U}^{˜}\left(z\right)\right\} ∈ {ℝ}^{m \times r} \left(9-1\right) \\ v \left(k\right) = {Z}^{- 1} \left\{V\left(z\right)\right\} ∈ {ℝ}^{r} \left(9-2\right)\end{matrix}$

Here, when the convolution operation of Expression (8) is expanded, Expression (10) is obtained through use of an internal variable "i" of the discrete time.
[Math 10] $\begin{matrix}\hat{u} \left(k\right) = {\sum }_{i = 0}^{k} {u}^{˜} \left(k-i\right) v \left(i\right) \\ = {u}^{˜} \left(0\right) v \left(k\right) + {\sum }_{i = 0}^{k - 1} {u}^{˜} \left(k-i\right) v \left(i\right)\end{matrix}$ (10)

Here, assuming that u tilde(0) has full row rank in which a matrix has maximum rank, solving Expression (10) for v(k) yields Expression (11-1). The term "full row rank" means a property established when the number of rows of the matrix and the number of rows that are linearly independent among the rows are equal.

In addition, *ũ*(0)^{†} in Expression (11-1) is a pseudoinverse of *ũ*(0), is represented by Expression (11-2) through use of a transpose ***ũ(0)^{t}* of *ũ*(0),** and is a minimum norm solution among solutions satisfying Expression (10). [Math 11] $\begin{matrix}v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right) \left(11-1\right) \\ {u}^{˜} {\left(0\right)}^{†} = {u}^{˜} {\left(0\right)}^{t} {\left({u}^{˜}\left(0\right){u}^{˜}{\left(0\right)}^{t}\right)}^{- 1} \left(11-2\right)\end{matrix}$

Further, Expression (5) can be expressed as Expression (12) by eliminating the transfer function matrix P(z) of the control object 30 through use of Expression (3) and Expression (7) .
[Math 12] $\hat{Y} \left(z\right) = P \left(z\right) {U}^{˜} \left(z\right) V \left(z\right) = {Y}^{˜} \left(z\right) V \left(z\right)$ (12)

Then, when Expression (12) is converted into an expression in the time domain, Expression (13) is obtained.
[Math 13] $\begin{matrix}\hat{y} \left(k\right) = {y}^{˜} \left(k\right) ∗ v \left(k\right) \\ \hat{y} \left(k\right) = {\sum }_{i = 0}^{k} {y}^{˜} \left(k-i\right) v \left(i\right)\end{matrix}$ (13)

From the above, the estimated output data y hat can be obtained by calculating Expression (13) through use of Expression (11-1).

### [Flow Chart]

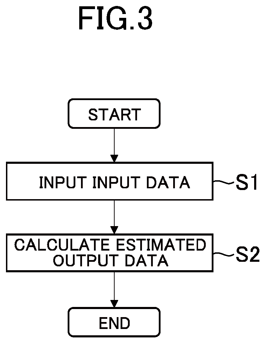

FIG. 3 is a flow chart for illustrating calculation processing for the estimated output data. Here, an example in which the experimental data for "r" experiments has already been acquired and the experimental data is stored in the memory of the estimation device 40 is described. First, any input data is input to the estimation device 40 (Step S1). The estimation device 40 calculates the estimated output data based on Expression (11-1) and Expression (13) through use of the input data that has been input (Step S2).

### [Simulation Results]

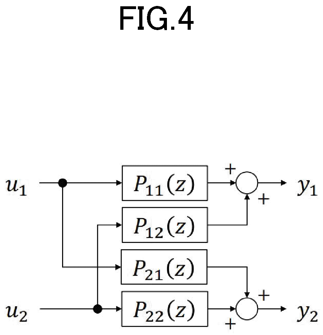

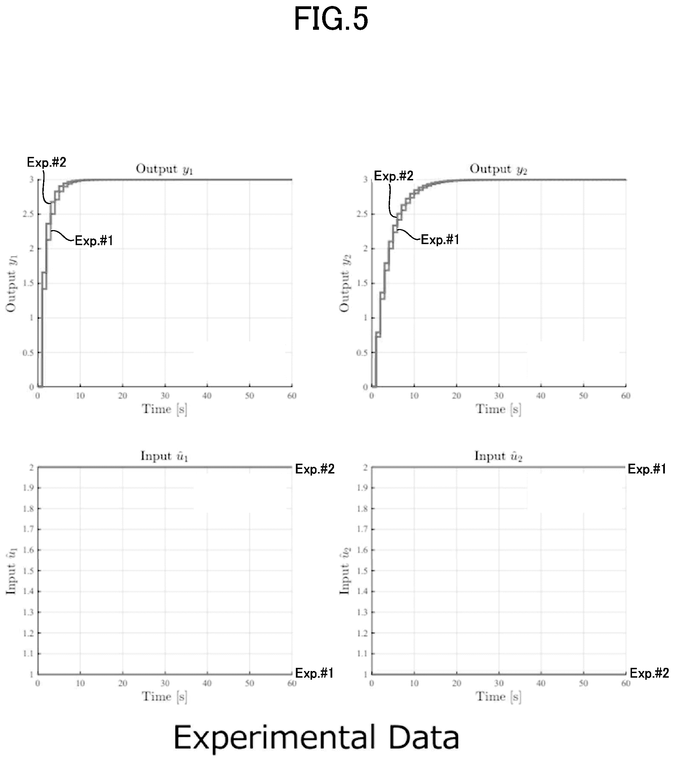

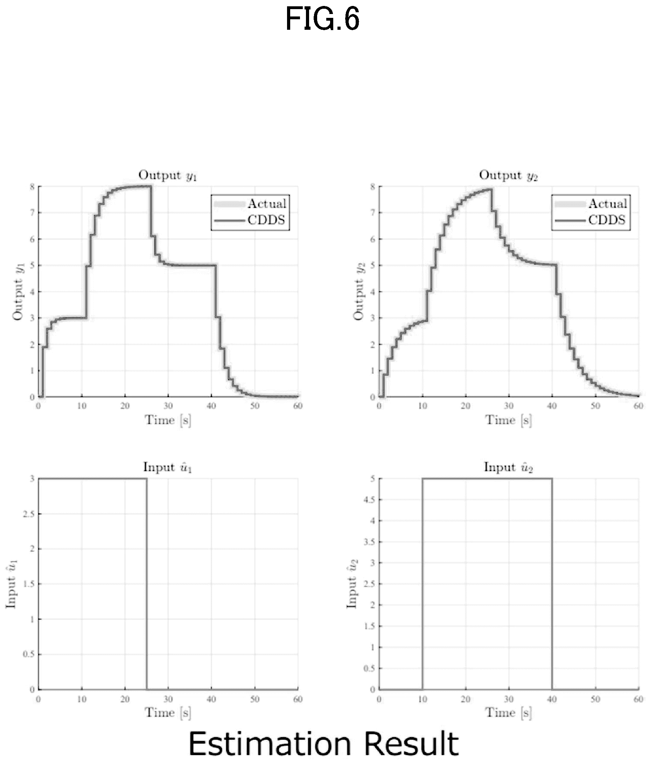

Here, specific simulation results in this embodiment are described with reference to FIG. 4 to FIG. 6. In this case, an example of the control object 30 having two inputs and two outputs is described. FIG. 4 is a block diagram for illustrating an example in which an output 1 (y₁) and an output 2 (y₂) are output when an input 1 (u₁) and an input 2 (u₂) are input to the control object 30 having a transfer function matrix represented by P(z). FIG. 5 shows an example of the experimental data. FIG. 6 shows an example of estimation results using the experimental data shown in FIG. 5.

The upper left waveform (Exp. #1) and the upper right waveform (Exp. #1) of FIG. 5 show waveforms of the output 1 and the output 2 in a first experiment in which an amplitude of the input 1 (Exp. #1) is 1 and an amplitude of the input 2 (Exp. #1) is 2. Further, the upper left waveform (Exp. #2) and the upper right waveform (Exp. #2) of FIG. 5 show waveforms of the output 1 and the output 2 in a second experiment in which the amplitude of the input 1 (Exp. #2) is 2 and the amplitude of the input 2 (Exp. #2) is 1.

In FIG. 6, an actual output waveform (light thick line: Actual) from the control object 30 and an estimated output waveform (dark thin line: CDDS) obtained by the estimation device 40 in a case in which any input data is input are shown through use of the experimental data (input and output data) for two experiments shown in FIG. 5. As shown in the upper waveforms of FIG. 6, it can be confirmed that the estimated output waveform obtained by the estimation device 40 substantially matches the actual output waveform from the control object 30 in both the output 1 and the output 2. That is, it can be confirmed that the estimation of the output has successfully been reproduced with high accuracy by the estimation system 1 according to this embodiment.

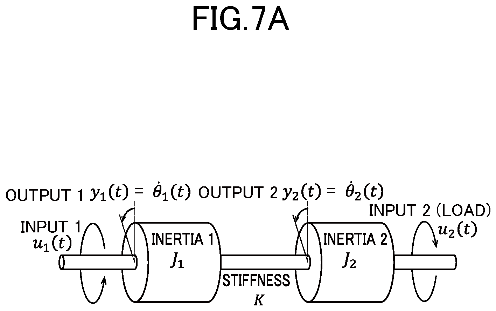

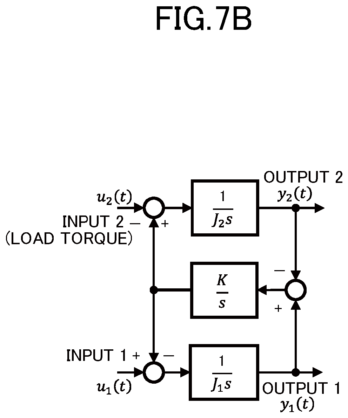

Further, other simulation results in this embodiment are described with reference to FIG. 7A to FIG. 7D. Here, an example in which a two-inertia actuator having two inputs and two outputs illustrated in FIG. 7A is used as the control object 30 is described. In addition, a block line diagram in this simulation is illustrated in FIG. 7B, and experimental conditions are shown in Table 1 below.

**[Table 1]**

| Physical quantity | Variable | Value | Unit |
|---|---|---|---|
| Motor torque | u₁ | - | Nm |
| Load torque | u₂ | - | Nm |
| Motor-side rotational angular velocity | y₁ | - | rad/s |
| Load-side rotational angular velocity | y₂ | - | rad/s |
| Motor-side moment of inertia | J₁ | 0.002 | kg m² |
| Load-side moment of inertia | J₂ | 0.002 | kg m² |
| Shaft torsional spring constant | K | 80 | Nm/rad |
| Control sampling period | Tₛ | 0.001 | s |

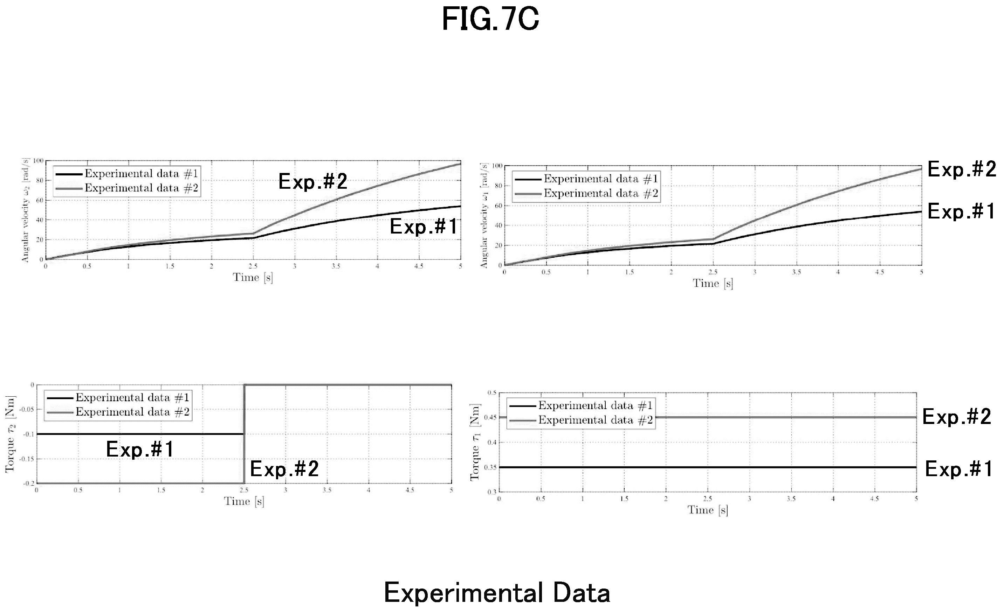

The upper right waveform (Exp. #1) and the upper left waveform (Exp. #1) of FIG. 7C show waveforms of the output 1 and the output 2 in the first experiment in a case in which a torque of the input 1 is 0.35 [Nm] as in the lower right waveform (Exp. #1) and a torque of the input 2 is changed from -0.1 [Nm] to 0 [Nm] as in the lower left waveform (Exp. #1). Further, the upper right waveform (Exp. #2) and the upper left waveform (Exp. #2) of FIG. 7C show waveforms of the output 1 and the output 2 in the second experiment in a case in which the torque of the input 1 is 0.45 [Nm] as in the lower right waveform (Exp. #2) and the torque of the input 2 is changed from -0.2 [Nm] to 0 [Nm] as in the lower left waveform (Exp. #2).

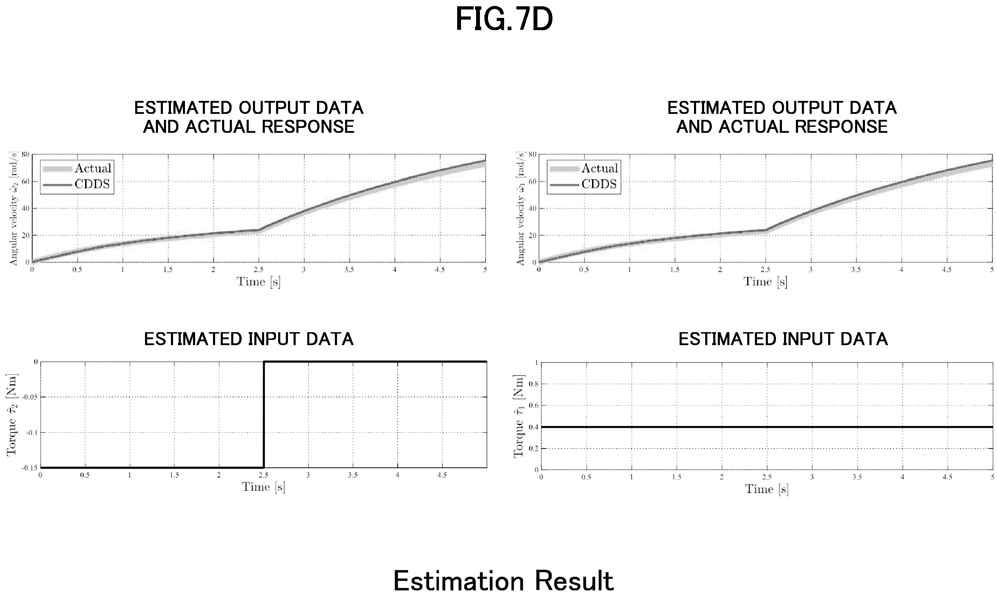

In FIG. 7D, an actual output waveform (light thick line: Actual) from the control object 30 and an estimated output waveform (dark thin line: CDDS) obtained by the estimation device 40 in a case in which any input data is input are shown through use of the experimental data (input and output data) for two experiments shown in FIG. 7C. As shown in the upper waveforms of FIG. 7D, it can be confirmed that the estimated output waveform obtained by the estimation device 40 substantially matches the actual output waveform from the control object 30 in both the output 1 and the output 2. That is, it can be confirmed that the estimation of the output has been successfully reproduced with high accuracy by the estimation system 1 according to this embodiment.

### [Summary]

In the estimation system 1 according to this embodiment that has been described above, the output of the control object 30 can be estimated without limiting the number of types of the input data. The estimation system 1 is useful particularly in a case in which the number of types of the input data is two or more. In addition, in the estimation system 1, as represented by Expression (11-1) and Expression (13), a transfer function representing the physical model of the control object 30 is not required, and hence the output of the control object 30 can be estimated without constructing the physical model of the control object 30. Further, in the estimation system 1, as represented by Expression (11-1) and Expression (13), the output of the control object 30 can be estimated regardless of parameters regarding the control device 20, and hence both linear and nonlinear control devices 20 are applicable.

The embodiment according to the present invention has been described above, but those specific configurations described in the embodiment are given as examples, and it is not intended to limit a technical scope of the present invention thereto. A person skilled in the art may appropriately modify those disclosed embodiments, and it is to be understood that the technical scope of the invention disclosed in the present application also includes such modifications.

### [Comparative Examples]

Now, other calculation examples of the estimated output data are described as comparative examples. In this embodiment described above, Expression (12) was obtained by introducing the r-dimensional vector V(z) satisfying Expression (7). The reason why the r-dimensional vector V(z) was introduced in this manner is that, while a relational expression of U tilde(z), U hat(z), Y tilde(z), and Y hat(z) is intended to be obtained by eliminating P(z) from Expression (3) and Expression (5), the calculation becomes complicated because each of those parameters is represented by a matrix expression assuming multi-input and multi-output. However, although the calculation becomes complicated, it is possible to calculate the estimated output data without introducing the r-dimensional vector V(z).

Examples of calculating the estimated output data in the control object 30 having two inputs and two outputs without introducing the r-dimensional vector V(z), which is the intermediate variable, are described below.

### [Comparative Example 1]

In this example, the estimated output data is calculated by devising the input data. Assuming that the number of experiments is two, when only a j-th piece of input data is given and other pieces of input data are set to 0, a first experimental data set represented by Expression (14-1) and a second experimental data set represented by Expression (14-2) are assumed to be obtained, and Expression (15) is obtained therefrom. Further, Expression (16) is obtained from Expression (15). [Math 14] $\begin{matrix}\left[\begin{matrix}{Y}_{11} \left(z\right) \\ {Y}_{21} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{U}_{1} \left(z\right) \\ 0\end{matrix}\right] \left(14-1\right) \\ \left[\begin{matrix}{Y}_{12} \left(z\right) \\ {Y}_{22} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}0 \\ {U}_{2} \left(z\right)\end{matrix}\right] \left(14-2\right)\end{matrix}$ [Math 15] $\left[\begin{matrix}{Y}_{11} \left(z\right) & {Y}_{12} \left(z\right) \\ {Y}_{21} \left(z\right) & {Y}_{22} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{U}_{1} \left(z\right) & 0 \\ 0 & {U}_{2} \left(z\right)\end{matrix}\right]$ (15) [Math 16] $\begin{matrix}\left[\begin{matrix}{P}_{11} \left(z\right) & {P}_{12} \left(z\right) \\ {P}_{21} \left(z\right) & {P}_{22} \left(z\right)\end{matrix}\right] = \left[\begin{matrix}{Y}_{11} \left(z\right) & {Y}_{12} \left(z\right) \\ {Y}_{21} \left(z\right) & {Y}_{22} \left(z\right)\end{matrix}\right] {\left[\begin{matrix}{U}_{1} \left(z\right) & 0 \\ 0 & {U}_{2} \left(z\right)\end{matrix}\right]}^{- 1} \\ = \left[\begin{matrix}{Y}_{11} \left(z\right) & {Y}_{12} \left(z\right) \\ {Y}_{21} \left(z\right) & {Y}_{22} \left(z\right)\end{matrix}\right] \left[\begin{matrix}\frac{1}{{U}_{1} \left(z\right)} & 0 \\ 0 & \frac{1}{{U}_{2} \left(z\right)}\end{matrix}\right] \\ = \left[\begin{matrix}\frac{{Y}_{11} \left(z\right)}{{U}_{1} \left(z\right)} & \frac{{Y}_{12} \left(z\right)}{{U}_{2} \left(z\right)} \\ \frac{{Y}_{21} \left(z\right)}{{U}_{1} \left(z\right)} & \frac{{Y}_{22} \left(z\right)}{{U}_{2} \left(z\right)}\end{matrix}\right]\end{matrix}$ (16)

Then, the estimated output data in a case in which any input data is input to the control object 30 is represented by Expression (17). Further, when Expression (17) is substituted into Expression (16), Expression (18) is obtained.
[Math 17] $\left[\begin{matrix}{\hat{Y}}_{1} \left(z\right) \\ {\hat{Y}}_{2} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{\hat{U}}_{1} \left(z\right) \\ {\hat{U}}_{2} \left(z\right)\end{matrix}\right]$ (17) [Math 18] $\left[\begin{matrix}{\hat{Y}}_{1} \left(z\right) \\ {\hat{Y}}_{2} \left(z\right)\end{matrix}\right] = \left[\begin{matrix}\frac{{Y}_{11} \left(z\right)}{{U}_{1} \left(z\right)} & \frac{{Y}_{12} \left(z\right)}{{U}_{2} \left(z\right)} \\ \frac{{Y}_{21} \left(z\right)}{{U}_{1} \left(z\right)} & \frac{{Y}_{22} \left(z\right)}{{U}_{2} \left(z\right)}\end{matrix}\right] \left[\begin{matrix}{\hat{U}}_{1} \left(z\right) \\ {\hat{U}}_{2} \left(z\right)\end{matrix}\right] = \left[\begin{matrix}\frac{{Y}_{11} \left(z\right)}{{U}_{1} \left(z\right)} {\hat{U}}_{1} \left(z\right) + \frac{{Y}_{12} \left(z\right)}{{U}_{2} \left(z\right)} {\hat{U}}_{2} \left(z\right) \\ \frac{{Y}_{21} \left(z\right)}{{U}_{1} \left(z\right)} {\hat{U}}_{1} \left(z\right) + \frac{{Y}_{22} \left(z\right)}{{U}_{2} \left(z\right)} {\hat{U}}_{2} \left(z\right)\end{matrix}\right]$ (18)

Here, when each piece of estimated output data is represented by Expression (19), a relational expression of Expression (20) is obtained.
[Math 19] $\begin{matrix}{\hat{Y}}_{11} \left(z\right) = \frac{{Y}_{11} \left(z\right)}{{U}_{1} \left(z\right)} {\hat{U}}_{1} \left(z\right) \\ {\hat{Y}}_{12} \left(z\right) = \frac{{Y}_{12} \left(z\right)}{{U}_{2} \left(z\right)} {\hat{U}}_{2} \left(z\right) \\ {\hat{Y}}_{21} \left(z\right) = \frac{{Y}_{21} \left(z\right)}{{U}_{1} \left(z\right)} {\hat{U}}_{1} \left(z\right) \\ {\hat{Y}}_{22} \left(z\right) = \frac{{Y}_{22} \left(z\right)}{{U}_{2} \left(z\right)} {\hat{U}}_{2} \left(z\right)\end{matrix}$ (19) [Math 20] $\begin{matrix}{U}_{1} \left(z\right) {\hat{Y}}_{11} \left(z\right) = {Y}_{11} \left(z\right) {\hat{U}}_{1} \left(z\right) \\ {U}_{2} \left(z\right) {\hat{Y}}_{12} \left(z\right) = {Y}_{12} \left(z\right) {\hat{U}}_{2} \left(z\right) \\ {U}_{1} \left(z\right) {\hat{Y}}_{21} \left(z\right) = {Y}_{21} \left(z\right) {\hat{U}}_{1} \left(z\right) \\ {U}_{2} \left(z\right) {\hat{Y}}_{22} \left(z\right) = {Y}_{22} \left(z\right) {\hat{U}}_{2} \left(z\right)\end{matrix}$ (20)

Then, from Expression (18) and Expression (20), the estimated output data in each experiment can be calculated as indicated in Expression (21).
[Math 21] $\left[\begin{matrix}{\hat{Y}}_{1} \left(z\right) \\ {\hat{Y}}_{2} \left(z\right)\end{matrix}\right] = \left[\begin{matrix}{\hat{Y}}_{11} \left(z\right) + {\hat{Y}}_{12} \left(z\right) \\ {\hat{Y}}_{21} \left(z\right) + {\hat{Y}}_{22} \left(z\right)\end{matrix}\right]$ (21)

### [Comparative Example 2]

In this example, the estimated output data is calculated based on inverse matrix calculation. The number of experiments is set to two, and different waveforms are given to the input data at that time. Assuming that a first experimental data set represented by Expression (22-1) and a second experimental data set represented by Expression (22-2) are obtained at that time, Expression (23) is obtained therefrom. Further, Expression (24) is obtained from Expression (23). In this case, delta(z) in Expression (24) is assumed to be Expression (25). [Math 22] $\begin{matrix}\left[\begin{matrix}{Y}_{11} \left(z\right) \\ {Y}_{21} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{U}_{11} \left(z\right) \\ {U}_{21} \left(z\right)\end{matrix}\right] \left(22-1\right) \\ \left[\begin{matrix}{Y}_{12} \left(z\right) \\ {Y}_{22} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{U}_{12} \left(z\right) \\ {U}_{22} \left(z\right)\end{matrix}\right] \left(22-2\right)\end{matrix}$ [Math 23] $\left[\begin{matrix}{Y}_{11} \left(z\right) & {Y}_{12} \left(z\right) \\ {Y}_{21} \left(z\right) & {Y}_{22} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{U}_{11} \left(z\right) & {U}_{12} \left(z\right) \\ {U}_{21} \left(z\right) & {U}_{22} \left(z\right)\end{matrix}\right]$ (23) [Math 24] $\begin{matrix}\left[\begin{matrix}{P}_{11} \left(z\right) & {P}_{12} \left(z\right) \\ {P}_{21} \left(z\right) & {P}_{22} \left(z\right)\end{matrix}\right] = \left[\begin{matrix}{Y}_{11} \left(z\right) & {Y}_{12} \left(z\right) \\ {Y}_{21} \left(z\right) & {Y}_{22} \left(z\right)\end{matrix}\right] {\left[\begin{matrix}{U}_{11} \left(z\right) & {U}_{12} \left(z\right) \\ {U}_{21} \left(z\right) & {U}_{22} \left(z\right)\end{matrix}\right]}^{- 1} = Y \left(z\right) \frac{adj U \left(z\right)}{det U \left(z\right)} \\ = \frac{1}{Δ \left(z\right)} \left[\begin{matrix}{Y}_{11} \left(z\right) & {Y}_{12} \left(z\right) \\ {Y}_{21} \left(z\right) & {Y}_{22} \left(z\right)\end{matrix}\right] \left[\begin{matrix}{U}_{22} \left(z\right) & - {U}_{12} \left(z\right) \\ - {U}_{21} \left(z\right) & {U}_{11} \left(z\right)\end{matrix}\right]\end{matrix}$ (24) [Math 25] $Δ \left(z\right) = det \left[\begin{matrix}{U}_{11} \left(z\right) & {U}_{12} \left(z\right) \\ {U}_{21} \left(z\right) & {U}_{22} \left(z\right)\end{matrix}\right] = {U}_{11} \left(z\right) {U}_{22} \left(z\right) - {U}_{12} \left(z\right) {U}_{21} \left(z\right)$ (25)

Further, the estimated output data obtained when any input data U hat is input to the control object 30 is represented by Expression (26).
[Math 26] $\left[\begin{matrix}{\hat{Y}}_{1} \left(z\right) \\ {\hat{Y}}_{2} \left(z\right)\end{matrix}\right] = \left[\begin{matrix}{P}_{11} \left(z\right) & {P}_{12} \left(z\right) \\ {P}_{21} \left(z\right) & {P}_{22} \left(z\right)\end{matrix}\right] \left[\begin{matrix}{\hat{U}}_{1} \left(z\right) \\ {\hat{U}}_{2} \left(z\right)\end{matrix}\right]$ (26)

Then, Expression (27) is obtained by substituting Expression (26) into Expression (24). Further, Expression (27) can be rewritten as Expression (28). In this case, W(z) in Expression (28) is assumed to be represented by Expression (29).
[Math 27] $\left[\begin{matrix}{\hat{Y}}_{1} \left(z\right) \\ {\hat{Y}}_{2} \left(z\right)\end{matrix}\right] = \frac{1}{Δ \left(z\right)} \left[\begin{matrix}{Y}_{11} \left(z\right) & {Y}_{12} \left(z\right) \\ {Y}_{21} \left(z\right) & {Y}_{22} \left(z\right)\end{matrix}\right] \left[\begin{matrix}{U}_{22} \left(z\right) & - {U}_{12} \left(z\right) \\ - {U}_{21} \left(z\right) & {U}_{11} \left(z\right)\end{matrix}\right] \left[\begin{matrix}{\hat{U}}_{1} \left(z\right) \\ {\hat{U}}_{2} \left(z\right)\end{matrix}\right]$ (27) [Math 28] $Δ \left(z\right) \left[\begin{matrix}{\hat{Y}}_{1} \left(z\right) \\ {\hat{Y}}_{2} \left(z\right)\end{matrix}\right] = \left[\begin{matrix}{W}_{11} \left(z\right) & {W}_{12} \left(z\right) \\ {W}_{21} \left(z\right) & {W}_{22} \left(z\right)\end{matrix}\right] \left[\begin{matrix}{\hat{U}}_{1} \left(z\right) \\ {\hat{U}}_{2} \left(z\right)\end{matrix}\right] = W \left(z\right) \left[\begin{matrix}{\hat{U}}_{1} \left(z\right) \\ {\hat{U}}_{2} \left(z\right)\end{matrix}\right]$ (28) [Math 29] $W \left(z\right) = \left[\begin{matrix}{W}_{11} \left(z\right) & {W}_{12} \left(z\right) \\ {W}_{21} \left(z\right) & {W}_{22} \left(z\right)\end{matrix}\right] = \left[\begin{matrix}{Y}_{11} \left(z\right) & {Y}_{12} \left(z\right) \\ {Y}_{21} \left(z\right) & {Y}_{22} \left(z\right)\end{matrix}\right] \left[\begin{matrix}{U}_{22} \left(z\right) & - {U}_{12} \left(z\right) \\ - {U}_{21} \left(z\right) & {U}_{11} \left(z\right)\end{matrix}\right]$ (29)

Further, Expression (28) is represented as Expression (30) in the time domain. Each element in Expression (30) is represented by Expression (31).
[Math 30] $δ \left(k\right) ∗ \left[\begin{matrix}{\hat{y}}_{1} \left(k\right) \\ {\hat{y}}_{2} \left(k\right)\end{matrix}\right] = w \left(k\right) ∗ \left[\begin{matrix}{\hat{u}}_{1} \left(k\right) \\ {\hat{u}}_{2} \left(k\right)\end{matrix}\right]$ (30) [Math 31] $\begin{matrix}w \left(k\right) = \left[\begin{matrix}{w}_{11} \left(k\right) & {w}_{12} \left(k\right) \\ {w}_{21} \left(k\right) & {w}_{22} \left(k\right)\end{matrix}\right] \\ {w}_{11} \left(k\right) = {y}_{11} \left(k\right) ∗ {u}_{22} \left(k\right) - {y}_{12} \left(k\right) ∗ {u}_{21} \left(k\right) \\ {w}_{12} \left(k\right) = - {y}_{11} \left(k\right) ∗ {u}_{12} \left(k\right) + {y}_{12} \left(k\right) ∗ {u}_{11} \left(k\right) \\ {w}_{21} \left(k\right) = {y}_{21} \left(k\right) ∗ {u}_{22} \left(k\right) - {y}_{22} \left(k\right) ∗ {u}_{21} \left(k\right) \\ {w}_{22} \left(k\right) = - {y}_{21} \left(k\right) ∗ {u}_{12} \left(k\right) + {y}_{22} \left(k\right) ∗ {u}_{11} \left(k\right) \\ δ \left(k\right) = {u}_{11} \left(k\right) ∗ {u}_{22} \left(k\right) - {u}_{12} \left(k\right) ∗ {u}_{21} \left(k\right)\end{matrix}$ (31)

Further, when Expression (30) is represented by a specific calculation expression, Expression (32) is obtained.
[Math 32] ${\sum }_{i = 0}^{k} δ \left(k-i\right) \left[\begin{matrix}{\hat{y}}_{1} \left(i\right) \\ {\hat{y}}_{2} \left(i\right)\end{matrix}\right] = {\sum }_{i = 0}^{k} w \left(k-i\right) \left[\begin{matrix}{\hat{u}}_{1} \left(i\right) \\ {\hat{u}}_{2} \left(i\right)\end{matrix}\right]$ (32)

Then, from Expression (32), the estimated output data can be calculated as indicated in Expression (33).
[Math 33] $\left[\begin{matrix}{\hat{y}}_{1} \left(k\right) \\ {\hat{y}}_{2} \left(k\right)\end{matrix}\right] = \frac{1}{δ \left(0\right)} \left({\sum }_{i = 0}^{k - 1} w \left(k-i\right)\left[\begin{matrix}{\hat{u}}_{1} \left(i\right) \\ {\hat{u}}_{2} \left(i\right)\end{matrix}\right]-{\sum }_{i = 0}^{k} δ \left(k-1\right) \left[\begin{matrix}{\hat{y}}_{1} \left(i\right) \\ {\hat{y}}_{2} \left(i\right)\end{matrix}\right]\right)$ (33)

As described above in Comparative Example 1 and Comparative Example 2, it is possible to calculate the estimated output data without introducing the r-dimensional vector V(z), which is the intermediate variable, but the calculation is complicated. Further, in Comparative Example 1 and Comparative Example 2, relatively simple examples of two inputs and two outputs are given, but the calculation becomes further complicated when the number of inputs and outputs increases.

### [Design Method for Control Device 20]

Next, a design method for the control device 20 using a parameter adjustment device 50 is described for each of a case of a general control device, a case of a control device in which an objective function is differentiable with a control parameter, and a case of a control device in which control parameters can be linearly separated. As illustrated in FIG. 1, it is preferred that the estimation system 1 include the parameter adjustment device 50.

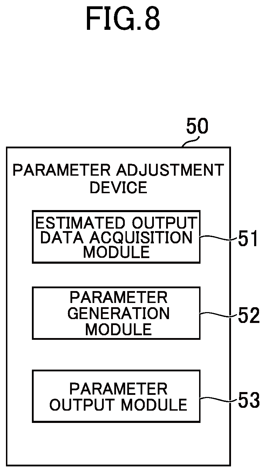

FIG. 8 is a functional block diagram for illustrating functions implemented in the parameter adjustment device. The parameter adjustment device 50 includes an estimated output data acquisition module 51, a parameter generation module 52, and a parameter output module 53. Each of those functions is mainly implemented by a processor included in the parameter adjustment device 50.

The estimated output data acquisition module 51 acquires the estimated output data output from the estimation device 40. The parameter generation module 52 calculates an optimal parameter based on the estimated output data and generates the optimal parameter. The parameter output module 53 outputs the generated optimal parameter to the control device 20.

The parameter adjustment device 50 is not limited to a computer provided separately, and each function implemented by the parameter adjustment device 50 may be implemented in the host control device 10 or the control device 20.

### [A. General Control Device 20]

First, assuming that W∈R^{p×p} is a positive definite symmetric matrix representing a weight, y_{d}(k)∈R^{p} is any reference trajectory (target trajectory) of an output, and θ∈R^{q} is a control parameter (parameter vector of the control device 20), an objective function J(θ) is defined by Expression (34).
[Math 34] $J \left(θ\right) = \frac{1}{N} {\sum }_{k = 0}^{N - 1} {\left({y}_{d}\left(k\right)-\hat{y}\left(k; θ\right)\right)}^{T} W \left({y}_{d}\left(k\right)-\hat{y}\left(k; θ\right)\right)$ (34)

On the assumption of an implementation of an actual control device, estimated input data u hat∈R^{m} is assumed to be generated through any control device including nonlinearity such as saturation based on a feedback signal of the estimated output data y hat. Through use of this control device 20, Expression (11-1), and Expression (13), the objective function J(θ) at a certain control parameter θ can be evaluated by Expression (34). Accordingly, an optimal parameter θ* that minimizes the objective function J(θ) indicated in Expression (34) can be obtained by Expression (35) through use of an appropriate optimization solver. The reference trajectory y_{d}(k) of the output may be given as a function, or may be generated through use of a reference model M(z) described later as a case in which the control parameter θ can be linearly separated.
[Math 35] ${θ}^{∗} = arg {min}_{θ} J \left(θ\right) = arg {min}_{θ} \frac{1}{N} {\sum }_{k = 0}^{N - 1} {\left({y}_{d}\left(k\right)-\hat{y}\left(k; θ\right)\right)}^{T} W \left({y}_{d}\left(k\right)-\hat{y}\left(k; θ\right)\right)$ (35)

Further, in addition to the quadratic form indicated in Expression (34), the objective function J(θ) may be represented through use of any convex function f() as indicated in Expression (36).
[Math 36] $J \left(θ\right) = \frac{1}{N} {\sum }_{k = 0}^{N - 1} f \left(\hat{y}\left(k; θ\right)\right)$ (36)

### [B. Case of being Differentiable with Control Parameter]

When a gradient of the objective function J(θ) can be calculated, the optimal parameter θ* can be efficiently obtained through use of various gradient methods. A gradient ∂J(θ)/∂θ of the objective function J(θ) can be represented by Expression (37).
[Math 37] $\frac{\partial J \left(θ\right)}{\partial θ} = - \frac{2}{N} {\sum }_{k = 0}^{N - 1} \frac{\partial \hat{y} {\left(k; θ\right)}^{T}}{\partial θ} W \left({y}_{d}\left(k\right)-\hat{y}\left(k; θ\right)\right)$ (37)

Here, a gradient with respect to θ of y hat(k; θ) represented by Expression (13) can be calculated as Expression (38). In this case, the left side of the lower expression of Expression (38) is a matrix representing a gradient with respect to θ of v(k; θ).
[Math 38] $\begin{matrix}\frac{\partial \hat{y} \left(k; θ\right)}{\partial {θ}^{T}} = {\sum }_{i = 0}^{k} {y}^{˜} \left(k-i\right) \frac{\partial v \left(i:θ\right)}{\partial {θ}^{T}} \\ \frac{\partial v \left(k; θ\right)}{\partial {θ}^{T}} = {u}^{˜} {\left(0\right)}^{†} \left(\frac{\partial \hat{u} \left(k:θ\right)}{\partial {θ}^{T}}-{\sum }_{i = 0}^{k - 1} {u}^{˜} \left(k-i\right) \frac{\partial v \left(i; θ\right)}{\partial {θ}^{T}}\right) . \\ k = 0 , 1 . . … N - 1\end{matrix}$ (38)

Further, when Expression (37) is differentiated with respect to θ, a Hessian matrix H(θ)∈R^{q×p} can be obtained as indicated in Expression (39). The second term on the right side of Expression (39) can be modified based on Expression (40).
[Math 39] $\begin{matrix}H \left(θ\right) = \frac{{\partial }^{2} J \left(θ\right)}{\partial θ \partial {θ}^{T}} = \frac{\partial }{\partial {θ}^{T}} \left(\frac{θJ \left(θ\right)}{\partial θ}\right) = \frac{\partial }{\partial {θ}^{T}} \left(-\frac{2}{N}{\sum }_{k = 0}^{N - 1} \frac{\hat{y} {\left(k:θ\right)}^{T}}{\partial θ} W \left({y}_{d}\left(k\right)-\hat{y}\left(k:θ\right)\right)\right) \\ = \frac{2}{N} {\sum }_{k = 0}^{N - 1} \frac{\partial \hat{y} {\left(k:θ\right)}^{T}}{\partial θ} W \frac{\partial \hat{y} \left(k:θ\right)}{\partial {θ}^{T}} - \frac{2}{N} {\sum }_{k = 0}^{N - 1} \frac{\partial }{\partial {θ}^{T}} \left(\frac{\partial \hat{y} {\left(k:θ\right)}^{T}}{\partial θ}\right) W \left({y}_{d}\left(k\right)-\hat{y}\left(k:θ\right)\right)\end{matrix}$ (39) [Math 40] $\begin{matrix}\frac{\partial }{\partial {θ}^{T}} \left(\frac{θ \hat{y} {\left(k; θ\right)}^{T}}{\partial θ}\right) = {\sum }_{i = 0}^{k} \frac{\partial }{\partial {θ}^{T}} \left(\frac{\partial v {\left(i:θ\right)}^{T}}{\partial θ}\right) {y}^{˜} {\left(k-i\right)}^{T} \\ \frac{\partial }{\partial {θ}^{T}} \left(\frac{\partial v {\left(k:θ\right)}^{T}}{\partial θ}\right) = \left(\frac{\partial }{\partial {θ}^{T}}\left(\frac{\partial \hat{u} {\left(k; θ\right)}^{T}}{\partial θ}\right){\sum }_{i = 0}^{k - 1} \frac{\partial }{\partial {θ}^{T}} \left(\frac{\partial v {\left(i:θ\right)}^{T}}{\partial θ}\right) {u}^{˜} {\left(k i\right)}^{T}\right) {u}^{˜} {\left(0\right)}^{{†}^{T}} . \\ k = 0 . 1 .. … N - 1\end{matrix}$ (40)

However, when it is difficult to calculate the second term on the right side of Expression (39), Expression (39) may be approximated by ignoring the second term as indicated in Expression (41).
[Math 41] $H \left(θ\right) ≃ \frac{2}{N} {\sum }_{k = 0}^{N - 1} \frac{\partial \hat{y} {\left(k; θ\right)}^{T}}{\partial θ} W \frac{\partial \hat{y} \left(k; θ\right)}{\partial {θ}^{T}}$ (41)

The optimal parameter θ* can be obtained, starting from an appropriate initial solution θ₀, by an iterative calculation using Newton's method indicated in Expression (42).
[Math 42] ${θ}_{m + 1} = {θ}_{m} - H {\left({θ}_{m}\right)}^{- 1} \frac{\partial J \left({θ}_{m}\right)}{\partial θ}$ (42)

### [C. Case in which Control Parameter of Control Device 20 can be Linearly separated]

Consideration is given to a case in which a virtual input U hat is determined as Expression (43) by a linear feedback controller C_{b}(z; θ)∈Q[z]^{m×p} and a feedforward controller C_{f}(z; θ)∈Q[z]^{m×p}. In this case, R(z)∈Q[z]^{p} is a Z-transform of a target signal. Further, Q[z] is a set representing all rational functions.
[Math 43] $\hat{U} \left(z; θ\right) = {C}_{f} \left(z; θ\right) R \left(z\right) - {C}_{b} \left(z; θ\right) \hat{Y} \left(z; θ\right) = C \left(z; θ\right) \left[\begin{matrix}R \left(z\right) \\ \hat{Y} \left(z; θ\right)\end{matrix}\right]$ (43)

C(z; θ) is a combination of C_{b}(z; θ) and C_{f}(z; θ), and is represented by Expression (44).
[Math 44] $C \left(z; θ\right) = \left[{C}_{f}\left(z; θ\right) -{C}_{b}\left(z; θ\right)\right] ∈ ℚ {\left[z\right]}^{m \times 2 p}$ (44)

Expression (44), when described in the time domain, can be represented by Expression (45). In this case, C_{f}(z; θ)=Z⁻¹{C_{f}(z; θ)}∈R^{m×p} and C_{b}(z; θ)=Z⁻¹{C_{b}(z; θ)}∈R^{m×p} are impulse responses of the control device 20, r(k)=Z⁻¹{R(z)}∈R^{p} is a target value signal, and "*" is a convolution operator.
[Math 45] $\hat{u} \left(k; θ\right) = {c}_{f} \left(k; θ\right) ∗ r \left(k\right) - {c}_{b} \left(k; θ\right) ∗ \hat{y} \left(k; θ\right)$ (45)

Further, consideration is given to a case in which the control parameter of the control device 20 can be linearly separated as in Expression (46).
[Math 46] $\begin{matrix}C \left(z; θ\right) = {C}_{01} \left(z\right) {θ}_{1} + {C}_{02} \left(z\right) {θ}_{1} + … + {C}_{0 q} \left(z\right) {θ}_{q} \\ C \left(z; θ\right) ∈ ℚ {\left[z\right]}^{m \times 2 p} , {θ}_{i} ∈ ℝ , {C}_{0 i} \left(z\right) ∈ ℚ {\left[z\right]}^{m \times 2 p}\end{matrix}$ (46)

A response of the closed-loop system is represented by Expression (48) by solving Expression (47). In this case, "I" is an identity matrix.
[Math 47] $\begin{matrix}\hat{Y} \left(z; θ\right) = P \left(z\right) \hat{U} \left(z; θ\right) \\ \hat{U} \left(z; θ\right) = {C}_{f} \left(z; θ\right) R \left(z\right) - {C}_{b} \left(z; θ\right) \hat{Y} \left(z; θ\right)\end{matrix}$ (47) [Math 48] $\hat{Y} \left(z; θ\right) = {\left(I+P\left(z\right){C}_{b}\left(z; θ\right)\right)}^{- 1} P \left(z\right) {C}_{f} \left(z; θ\right) R \left(z\right)$ (48)

Further, Expression (49) is considered as a response of the reference model M(z).
[Math 49] ${Y}_{d} \left(z\right) = M \left(z\right) R \left(z\right)$ (49)

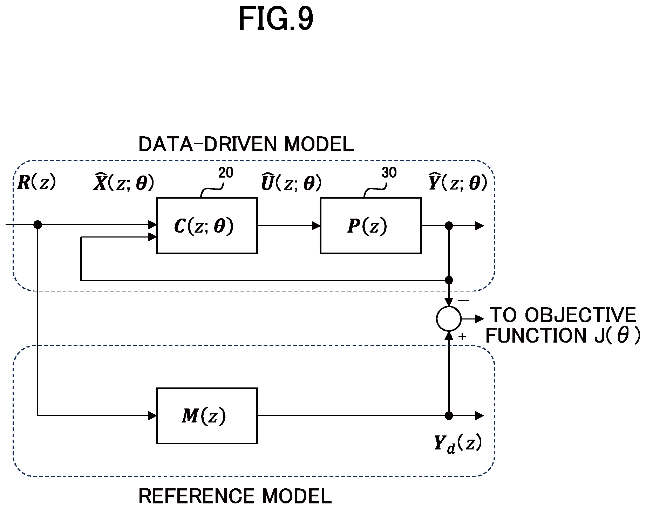

Consideration is given to obtaining a control parameter that minimizes Expression (34). That is, the control parameter θ is obtained such that a closed-loop characteristic (I+P(z)C_{b}(z; θ))⁻¹P(z)C_{f}(z; θ) of Expression (48) is closest to the reference model M(z). When this is represented by a block line diagram, the result as illustrated in FIG. 9 is obtained.

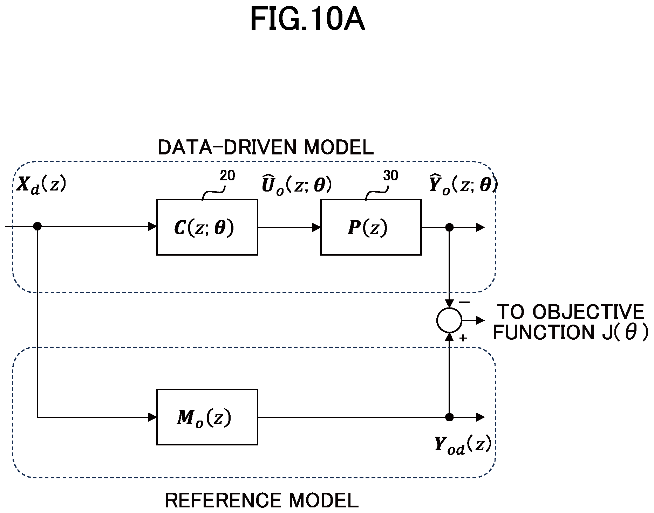

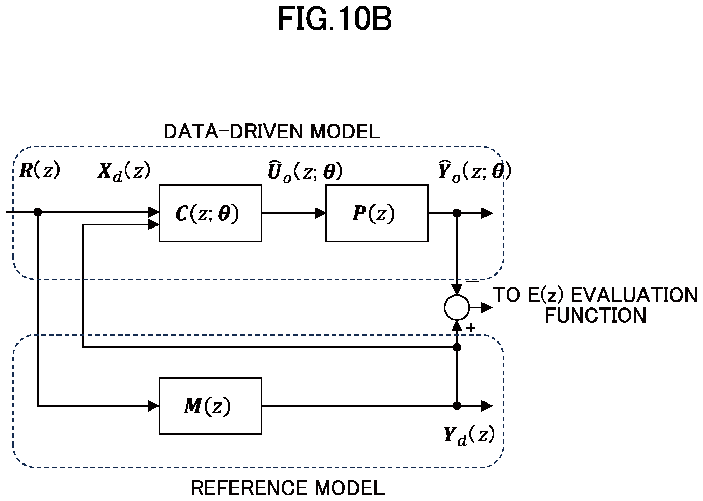

Here, consideration is given to, instead of being matched with the reference model M(z), matching the closed-loop characteristic with a corresponding reference model as illustrated in FIG. 10A. This is obtained by replacing the feedback signal Y hat(z; θ) with the output Y_{d}(z) of the reference model as illustrated in FIG. 10B. An open-loop characteristic of the object can be represented by Expression (50) by solving Expression (47).
[Math 50] $\begin{matrix}\hat{Y} \left(z; θ\right) = P \left(z\right) \left({C}_{f}\left(z; θ\right)R\left(z\right)-{C}_{b}\left(z; θ\right)\hat{Y}\left(z; θ\right)\right) \\ = P \left(z\right) \left[{C}_{f}\left(z; θ\right)-{C}_{b}\left(z; θ\right)\right] \left[\begin{matrix}R \left(z\right) \\ \hat{Y} \left(z; θ\right)\end{matrix}\right] \\ = P \left(z\right) C \left(z; θ\right) \hat{X} \left(z; θ\right)\end{matrix}$ (50)

Here, a transfer function P(z)C(z; θ) from a signal X hat(z; θ) to the output Y hat(z; θ) has an open-loop characteristic. An open-loop reference model corresponding thereto is assumed to be M₀(z). That is, the model M₀(z) satisfying Expression (51) is considered.
[Math 51] $\begin{matrix}{Y}_{d} \left(z\right) = {M}_{of} \left(z\right) R \left(z\right) - {M}_{ob} \left(z\right) {Y}_{d} \left(z\right) \\ = \left[{M}_{of}\left(z\right)-{M}_{ob}\left(z\right)\right] \left[\begin{matrix}R \left(z\right) \\ {Y}_{d} \left(z\right)\end{matrix}\right] \\ = {M}_{o} \left(z\right) {X}_{d} \left(z\right)\end{matrix}$ (51)

When Expression (51) is modified, Expression (52) is obtained.
[Math 52] ${Y}_{d} \left(z\right) = {\left(I+{M}_{ob}\left(z\right)\right)}^{- 1} {M}_{of} \left(z\right) R \left(z\right)$ (52)

Then, Expression (53) is established from Expression (52) and Expression (49).
[Math 53] $M \left(z\right) = {\left(I+{M}_{ob}\left(z\right)\right)}^{- 1} {M}_{of} \left(z\right)$ (53)

Further, X_{d}(z) is represented by Expression (54) through use of Expression (52).
[Math 54] ${X}_{d} \left(z\right) = \left[\begin{matrix}R \left(z\right) \\ {Y}_{d} \left(z\right)\end{matrix}\right] = \left[\begin{matrix}R \left(z\right) \\ {\left(I+{M}_{ob}\left(z\right)\right)}^{- 1} {M}_{of} \left(z\right) R \left(z\right)\end{matrix}\right] = \left[\begin{matrix}I \\ {\left(I+{M}_{ob}\left(z\right)\right)}^{- 1} {M}_{of} \left(z\right)\end{matrix}\right] R \left(z\right)$ (54)

Further, X_{d}(z) is represented by Expression (55) through use of Expression (52).
[Math 55] ${X}_{d} \left(z\right) = \left[\begin{matrix}I \\ M \left(z\right)\end{matrix}\right] R \left(z\right)$ (55)

Consideration is given to matching the open-loop characteristic P(z)C(z; θ) of the control device 20 and the control object 30 with the open-loop reference model M₀ through use of X_{d}(z) indicated by Expression (55). In other words, X_{d}(z) is input and a deviation of the output thereof is evaluated. An output Y₀ hat(z; θ) of the control device 20 and the control object 30 obtained when X_{d}(z) is input is represented by Expression (56), and an output Y_{od}(z) of the open-loop reference model M₀ is represented by Expression (57).
[Math 56] ${\hat{Y}}_{o} \left(z; θ\right) = P \left(z\right) C \left(z; θ\right) {X}_{d} \left(z\right)$ (56) [Math 57] ${Y}_{od} \left(z\right) = {M}_{o} \left(z\right) {X}_{d} \left(z\right)$ (57)

It can be confirmed from Expression (58) that the output Y_{od}(z) of the open-loop reference model is equal to an original reference trajectory output Y_{d}(z).
[Math 58] $\begin{matrix}{Y}_{od} \left(z\right) = {M}_{o} \left(z\right) {X}_{d} \left(z\right) \\ = {M}_{of} \left(z\right) R \left(z\right) - {M}_{ob} \left(z\right) {Y}_{d} \left(z\right) \\ = {M}_{of} \left(z\right) R \left(z\right) - {M}_{ob} \left(z\right) {\left(I+{M}_{ob}\left(z\right)\right)}^{- 1} {M}_{of} \left(z\right) R \left(z\right) \\ = \left(I-{M}_{ob}\left(z\right){\left(I+{M}_{ob}\left(z\right)\right)}^{- 1}\right) {M}_{of} \left(z\right) R \left(z\right) \\ = \left(\left(I+{M}_{ob}\left(z\right)\right){\left(I+{M}_{ob}\left(z\right)\right)}^{- 1}-{M}_{ob}\left(z\right){\left(I+{M}_{ob}\left(z\right)\right)}^{- 1}\right) {M}_{of} \left(z\right) R \left(z\right) \\ = {\left(I+{M}_{ob}\left(z\right)\right)}^{- 1} {M}_{of} \left(z\right) R \left(z\right) \\ = {Y}_{d} \left(z\right)\end{matrix}$ (58)

Expression (56) can be organized as Expression (59) through use of Expression (46). In this case, Y hatₒ₀(z), Y hatₒ₀ᵢ(z), and U hatₒ₀ᵢ(z) are respectively represented by Expression (60).
[Math 59] $\begin{matrix}{\hat{Y}}_{o} \left(z; θ\right) = P \left(z\right) C \left(z; θ\right) {X}_{d} \left(z\right) \\ = P \left(z\right) \left({C}_{01}\left(z\right){θ}_{1}+{C}_{02}\left(z\right){θ}_{1}+…+{C}_{0 q}\left(z\right){θ}_{q}\right) {X}_{d} \left(z\right) \\ = P \left(z\right) {C}_{01} \left(z\right) {X}_{d} \left(z\right) {θ}_{1} + P \left(z\right) {C}_{02} \left(z\right) {X}_{d} \left(z\right) {θ}_{2} … + P \left(z\right) {C}_{0 q} \left(z\right) {X}_{q} \left(z\right) {θ}_{q} \\ = {\hat{Y}}_{o 01} \left(z\right) {θ}_{1} + {\hat{Y}}_{o 02} \left(z\right) {θ}_{2} + … + {\hat{Y}}_{o 0 q} \left(z\right) {θ}_{q} \\ = \left[{\hat{Y}}_{o 01}\left(z\right) {\hat{Y}}_{o 02}\left(z\right) … {\hat{Y}}_{o 0 q}\left(z\right)\right] \left[\begin{matrix}{θ}_{1} \\ {θ}_{2} \\ ⋮ \\ {θ}_{q}\end{matrix}\right] \\ = {\hat{Y}}_{o 0} \left(z\right) θ\end{matrix}$ (59) [Math 60] $\begin{matrix}{\hat{Y}}_{o 0} \left(z\right) = \left[{\hat{Y}}_{o 01}\left(z\right) {\hat{Y}}_{o 02}\left(z\right) … {\hat{Y}}_{o 0 q}\left(z\right)\right] \\ {\hat{Y}}_{o 0 i} \left(z\right) = P \left(z\right) {\hat{U}}_{o 0 i} \left(z\right) \\ {\hat{U}}_{o 0 i} \left(z\right) = {C}_{0 i} \left(z\right) {X}_{d} \left(z\right) \\ i = 1 , 2 , … , q\end{matrix}$ (60)

Further, Y hatₒ₀ᵢ(z) is represented by Expression (62) when a vector Vₒ₀ᵢ(z) satisfying Expression (61) is introduced, similarly to Expression (12).
[Math 61] ${\hat{U}}_{o 0 i} \left(z\right) = {U}^{˜} \left(z\right) {V}_{o 0 i} \left(z\right)$ (61) [Math 62] ${\hat{Y}}_{o 0 i} \left(z\right) = P \left(z\right) {U}^{˜} \left(z\right) {V}_{o 0 i} \left(z\right) = {Y}^{˜} \left(z\right) {V}_{o 0 i} \left(z\right)$ (62)

When Expressions (59) to (61) are represented in the time domain, Expressions (59) to (61) are represented as Expression (63).
[Math 63] $\begin{matrix}{\hat{y}}_{o} \left(k; θ\right) = {\hat{y}}_{o 0} \left(k\right) θ ∈ {ℝ}^{p} \\ {\hat{y}}_{o 0} \left(k\right) = \left[{\hat{y}}_{o 01}\left(k\right) {\hat{y}}_{o 02}\left(k\right) … {\hat{y}}_{o 0 q}\left(k\right)\right] ∈ {ℝ}^{p \times q} \\ {\hat{y}}_{o 0 i} \left(k\right) = {y}^{˜} \left(k\right) ∗ {υ}_{o 0 i} \left(k\right) = {\sum }_{i = 0}^{k} {y}^{˜} \left(k-i\right) {υ}_{o 0 i} \left(i\right) ∈ {ℝ}^{p} \\ {\hat{u}}_{o 0 i} \left(k\right) = {u}^{˜} \left(k\right) ∗ {υ}_{o 0 i} \left(k\right) = {\sum }_{i = 0}^{k} {u}^{˜} \left(k-i\right) {υ}_{o 0 i} \left(i\right) ∈ {ℝ}^{m} \\ {\hat{u}}_{o 0 i} \left(k\right) = {c}_{0 i} \left(k\right) ∗ {x}_{d} \left(k\right) = {\sum }_{i = 0}^{k} {c}_{0 i} \left(k-i\right) {x}_{d} \left(i\right) ∈ {ℝ}^{m}\end{matrix}$ (63)

Further, u hatₒ₀ᵢ is represented by Expression (64) similarly to Expression (11-1).
[Math 64] ${v}_{o 0 i} \left(k\right) = {u}^{˜} {\left(0\right)}^{†} \left({\hat{u}}_{o 0 i}\left(k\right)-{\sum }_{i = 0}^{k - 1} {u}^{˜} \left(k-i\right) {v}_{o 0 i} \left(i\right)\right)$ (64)

Further, a signal in the time domain of the output Y_{od}(z) of the open-loop reference model is represented by Expression (65) from Expression (58).
[Math 65] ${y}_{od} \left(k\right) = {m}_{o} \left(k\right) ∗ {x}_{d} \left(k\right) = m \left(k\right) ∗ r \left(k\right) = {\sum }_{i = 0}^{k} m \left(k-i\right) r \left(i\right)$ (65)

Further, a signal in the time domain of input X_{d}(z) in the open-loop reference model is represented by Expression (66) from Expression (55). In this case, yₒ₀(k)=Z⁻¹{Y_{od}(z)}∈R^{p}, x_{d}(k)=Z⁻¹{X_{d}(z)}∈R^{2p}, m₀(k)=Z⁻¹{M₀(z) }∈R^{p×2p}, and m(k)=Z⁻¹{M(z)}∈R^{p×p}.
[Math 66] ${x}_{d} \left(z\right) = \left[\begin{matrix}r \left(k\right) \\ m \left(k\right) ∗ r \left(k\right)\end{matrix}\right] = \left[\begin{matrix}r \left(k\right) \\ {y}_{od} \left(k\right)\end{matrix}\right]$ (66)

Accordingly, the control parameter θ that minimizes an objective function, which is a weighted sum of squares of the deviation of the open-loop output indicated in Expression (67), is obtained by the calculation expression of Expression (70) by solving ∂Jo(θ)/∂θ=0 from Expressions (68) and (69). In the case of p≥q, "†" is an ordinary inverse matrix. Meanwhile, in the case of p<q, "†" is required to be calculated as a Moore-Penrose generalized inverse matrix.
[Math 67] ${J}_{o} \left(θ\right) = \frac{1}{N} {\sum }_{k = 0}^{N - 1} {\left({y}_{od}\left(k\right)-{\hat{y}}_{o}\left(k; θ\right)\right)}^{T} W \left({y}_{od}\left(k\right)-{\hat{y}}_{o}\left(k; θ\right)\right)$ (67) [Math 68] $\begin{matrix}{J}_{o} \left(θ\right) = \frac{1}{N} {\sum }_{k = 0}^{N - 1} {\left({y}_{od}\left(k\right)-{\hat{y}}_{o 0}\left(k\right)θ\right)}^{T} W \left({y}_{od}\left(k\right)-{\hat{y}}_{o 0}\left(k\right)θ\right) \\ = \frac{1}{N} {\sum }_{k = 0}^{N - 1} \left({y}_{od}{\left(k\right)}^{T}W{y}_{od}\left(k\right)-2{y}_{od}{\left(k\right)}^{T}W{\hat{y}}_{o 0}\left(k\right)θ+{θ}^{T}{\hat{y}}_{o 0}{\left(k\right)}^{T}W{\hat{y}}_{o 0}\left(k\right)θ\right)\end{matrix}$ (68) [Math 69] $\begin{matrix}\frac{\partial {J}_{o} \left(θ\right)}{\partial θ} = \frac{1}{N} {\sum }_{k = 0}^{N - 1} \left(-2{\hat{y}}_{o 0}{\left(k\right)}^{T}W{y}_{od}\left(k\right)+2{\hat{y}}_{o 0}{\left(k\right)}^{T}W{\hat{y}}_{o 0}\left(k\right)θ\right) \\ = - \frac{2}{N} {\sum }_{k = 0}^{N - 1} {\hat{y}}_{o 0} {\left(k\right)}^{T} W {y}_{od} \left(k\right) + \frac{2}{N} {\sum }_{k = 0}^{N - 1} \left({\hat{y}}_{o 0}{\left(k\right)}^{T}W{\hat{y}}_{o 0}\left(k\right)\right) θ\end{matrix}$ (69) [Math 70] ${θ}^{∗} = {\left({\sum }_{k = 0}^{N - 1} {\hat{y}}_{o 0} {\left(k\right)}^{T} W {\hat{y}}_{o 0} \left(k\right)\right)}^{†} {\sum }_{k = 0}^{N - 1} {\hat{y}}_{o 0} {\left(k\right)}^{T} W {y}_{od} \left(k\right)$ (70)

The optimal parameter θ* can be obtained by an operation not including iterative calculation in Expression (70), and hence a calculation cost is suppressed compared to Expression (42) in which iterative calculation is performed until convergence.

Here, a numerical example applied to current control of a permanent magnet synchronous motor in a case in which control parameters of the control device 20 can be linearly separated is given. A dq-axis circuit equation of the permanent magnet synchronous motor is represented by Expression (71). In this case, y₁ and y₂ represent d-axis and q-axis currents and are outputs of the control object 30, u₁ and u₂ represent d-axis and q-axis voltages and are inputs of the control object 30, L_{d} and L_{q} represent d-axis and q-axis winding inductances, R represents a winding resistance, and ω represents a rotational speed of a rotor. ω is assumed to be constant. Each parameter is set such that L_{d}=L_{q}=R=1 and ω=2. A digital control system with a sampling time Ts=0.05 assuming zero-order hold for the inputs is assumed.
[Math 71] $\begin{matrix}{L}_{d} \frac{{dy}_{1}}{dt} = - {Ry}_{1} + {L}_{q} {ωy}_{2} + {u}_{1} \\ {L}_{q} \frac{{dy}_{2}}{dt} = - {Ry}_{2} - {L}_{d} {ωy}_{1} + {u}_{2}\end{matrix}$ (71)

Digital PI control (proportional-integral control) and decoupling control represented by Expression (72) are considered as a current control system. The term "decoupling control" refers to control for avoiding interference between the d-axis and q-axis currents due to changes thereof. In Expression (72), θ₁ and θ₃ represent proportional control gains, θ₂ and θ₄ represent integral control gains, and θ₅ and θ₆ represent decoupling control gains.
[Math 72] $\begin{matrix}U \left(z\right) = \left[\begin{matrix}{U}_{1} \left(z\right) \\ {U}_{2} \left(z\right)\end{matrix}\right] = \left[\begin{matrix}{θ}_{1} + \frac{{θ}_{2} T , z}{z - 1} & 0 \\ 0 & {θ}_{3} + \frac{{θ}_{4} {T}_{3} z}{z - 1}\end{matrix}\right] \left[\begin{matrix}{R}_{1} \left(z\right) - {Y}_{1} \left(z\right) \\ {R}_{2} \left(z\right) - {Y}_{2} \left(z\right)\end{matrix}\right] - \left[\begin{matrix}0 & {θ}_{5} \\ {θ}_{6} & 0\end{matrix}\right] \left[\begin{matrix}{Y}_{1} \left(z\right) \\ {Y}_{2} \left(z\right)\end{matrix}\right] \\ = \left[\begin{matrix}{θ}_{1} + \frac{{θ}_{2} T , z}{z - 1} & 0 & - {θ}_{1} - \frac{{θ}_{2} T , z}{z - 1} & - {θ}_{5} \\ 0 & {θ}_{3} - \frac{{θ}_{1} T , z}{z - 1} & - {θ}_{6} & - {θ}_{3} - \frac{{θ}_{4} T , z}{z - 1}\end{matrix}\right] \left[\begin{matrix}{R}_{1} \left(z\right) \\ {R}_{2} \left(z\right) \\ {Y}_{1} \left(z\right) \\ {Y}_{2} \left(z\right)\end{matrix}\right] \\ = C \left(z, θ\right) \left[\begin{matrix}R \left(z\right) \\ Y \left(z\right)\end{matrix}\right]\end{matrix}$ (72)

Here, the control device 20 can be linearly separated with respect to control gains as indicated by Expression (73).
[Math 73] $\begin{matrix}C \left(z:θ\right) = \left[\begin{matrix}{θ}_{1} - \frac{{θ}_{2} T , z}{z - 1} & 0 & - {θ}_{1} - \frac{{θ}_{2} T , z}{z - 1} & - {θ}_{5} \\ 0 & {θ}_{3} + \frac{{θ}_{1} T , z}{z - 1} & - {θ}_{6} & - {θ}_{3} - \frac{{θ}_{1} T , z}{z - 1}\end{matrix}\right] \\ = \left[\begin{matrix}1 & 0 & - 1 & 0 \\ 0 & 0 & 0 & 0\end{matrix}\right] {θ}_{1} + \left[\begin{matrix}\frac{T , z}{z - 1} & 0 & - \frac{T , z}{z - 1} & 0 \\ 0 & 0 & 0 & 0\end{matrix}\right] {θ}_{2} + \left[\begin{matrix}0 & 0 & 0 & 0 \\ 0 & 1 & 0 & - 1\end{matrix}\right] {θ}_{3} \\ + \left[\begin{matrix}0 & 0 & 0 & 0 \\ 0 & \frac{T , z}{z - 1} & 0 & - \frac{T , z}{z - 1}\end{matrix}\right] {θ}_{1} + \left[\begin{matrix}0 & 0 & 0 & - 1 \\ 0 & 0 & 0 & 0\end{matrix}\right] {θ}_{5} + \left[\begin{matrix}0 & 0 & 0 & 0 \\ 0 & 0 & - 1 & 0\end{matrix}\right] {θ}_{6} \\ = {C}_{01} \left(z\right) {θ}_{1} + {C}_{02} \left(z\right) {θ}_{2} + {C}_{03} \left(z\right) {θ}_{3} + {C}_{04} \left(z\right) {θ}_{4} + {C}_{05} \left(z\right) {θ}_{5} + {C}_{06} \left(z\right) {θ}_{6}\end{matrix}$ (73)

Further, a model represented by Expression (74) in which a d-axis and a q-axis are decoupled is considered as the reference model M(z).
[Math 74] $M \left(z\right) = \left[\begin{matrix}\frac{1}{τ \left(z-{e}^{- {T}_{s} / τ}\right)} & 0 & \\ 0 & \frac{1}{τ \left(z-{e}^{- {T}_{s} / τ}\right)} & 0\end{matrix}\right]$ (74)

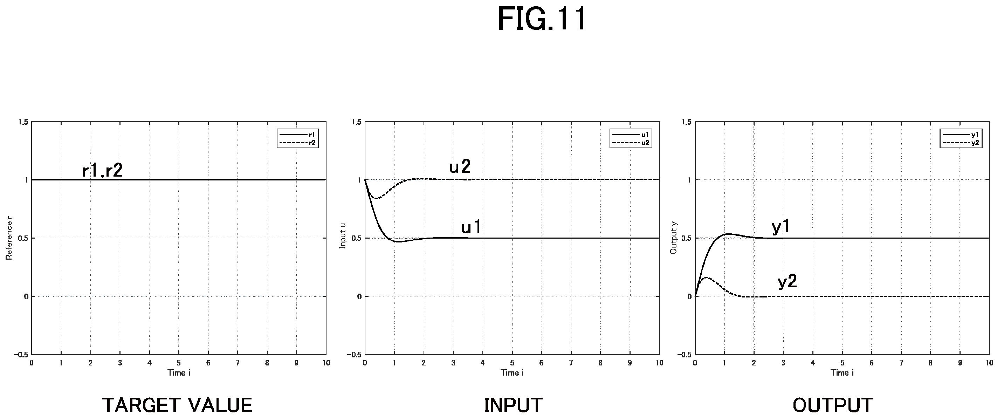

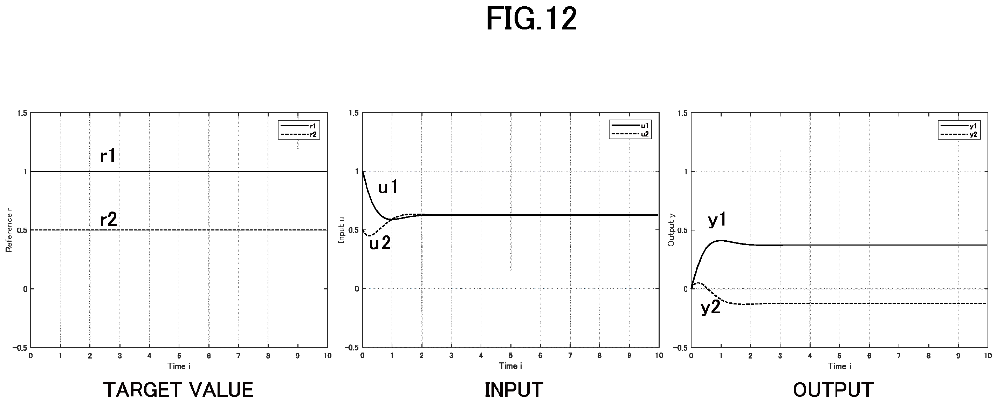

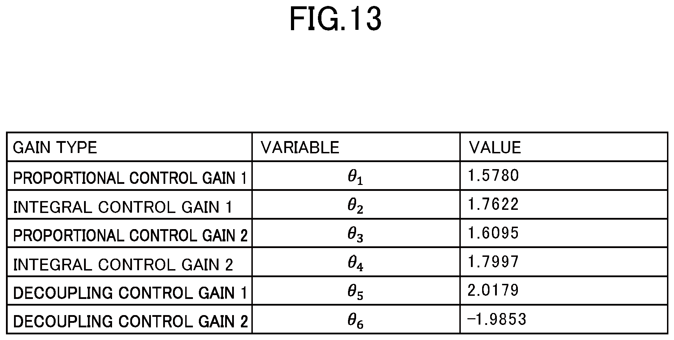

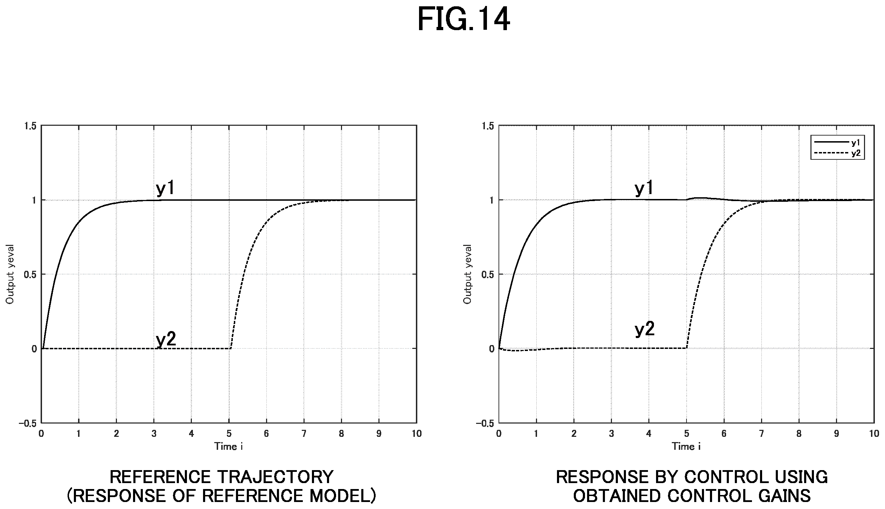

FIG. 11 shows response graphs of Data Acquisition Experiment 1, and FIG. 12 shows response graphs of Data Acquisition Experiment 2. FIG. 11 and FIG. 12 respectively show Data Acquisition Experiments 1 and 2 performed only with proportional control gains θ₁=θ₃=1 (that is, θ₂ to θ₆=0). FIG. 13 shows results of obtaining control gains θ₁ to θ₆ in accordance with a procedure of the above-mentioned proposed method through use of data shown in FIG. 11 and FIG. 12. The right graph of FIG. 14 shows a response in a case in which control is performed through use of the obtained control gains θ₁ to θ₆. This is almost the same as the response of the reference model M(z) (the left graph of FIG. 14), and hence it can be confirmed that control gains for achieving a response of the reference model M(z) have been successfully obtained by the above-mentioned proposed method described as a case in which the control parameters of the control device 20 can be linearly separated.

## Claims

1. An estimation system for estimating an output of a control object based on experimental data acquired by a closed-loop control system that outputs output data corresponding to input data from a control device to the control object and feeds back the output data to the control device, the estimation system comprising:
an experimental data storage unit configured to store the experimental data;
an input module configured to receive an input of any input data; and
a calculation module configured to calculate estimated output data based on Math 1 and Math 2. [Math 1] $\hat{y} \left(k\right) = {\sum }_{i = 0}^{k} {y}^{˜} \left(k-i\right) v \left(i\right)$ [Math 2] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
ŷ: estimated output data
û: input data
*ỹ*: experimental output data
*ũ*: experimental input data
v: intermediate variable
*ũ*(0)^{†}: pseudoinverse of *ũ*(0)
k: discrete time
i: internal variable of discrete time

2. The estimation system according to claim 1, wherein a number of types of the input data input to the control object is two or more.

3. An estimation method of estimating an output of a control object based on experimental data acquired by a closed-loop control system that outputs output data corresponding to input data from a control device to the control object and feeds back the output data to the control device, the estimation method comprising the steps of:
storing the experimental data;
receiving an input of any input data; and
calculating estimated output data based on Math 3 and Math 4. [Math 3] $\hat{y} \left(k\right) = {\sum }_{i = 0}^{k} {y}^{˜} \left(k-i\right) v \left(i\right)$ [Math 4] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
ŷ: estimated output data
û: input data
*ỹ*: experimental output data
*ũ*: experimental input data
v: intermediate variable
*ũ*(0)^{†}: pseudoinverse of *ũ*(0)
k: discrete time
i: internal variable of discrete time

4. A program for estimating an output of a control object based on experimental data acquired by a closed-loop control system that outputs output data corresponding to input data from a control device to the control object and feeds back the output data to the control device, the program causing a computer to execute the steps of:
storing the experimental data;
receiving an input of any input data; and
calculating estimated output data based on Math 5 and Math 6. [Math 5] $\hat{y} \left(k\right) = {\sum }_{i = 0}^{k} {y}^{˜} \left(k-i\right) v \left(i\right)$ [Math 6] $v \left(k\right) = {u}^{˜} {\left(0\right)}^{†} \left(\hat{u}\left(k\right)-{\sum }_{i = 0}^{k - 1} {u}^{˜} \left(k-i\right) v \left(i\right)\right)$
ŷ: estimated output data
û: input data
*ỹ*: experimental output data
*ũ*: experimental input data
v: intermediate variable
*ũ*(0)^{†}: pseudoinverse of ũ(0)
k: discrete time
i: internal variable of discrete time

5. The estimation system according to claim 1, further comprising a parameter generation module configured to generate an optimal parameter of the control device based on Math 7,
wherein the control object is controlled by the control device in which a control parameter is adjusted to the optimal parameter. [Math 7] ${θ}^{∗} = arg {min}_{θ} \frac{1}{N} {\sum }_{k = 0}^{N - 1} {\left({y}_{d}\left(k\right)-\hat{y}\left(k; θ\right)\right)}^{T} W \left({y}_{d}\left(k\right)-\hat{y}\left(k; θ\right)\right)$
θ*: optimal parameter
θ: parameter vector of control device
y_{d}: any reference trajectory of output
W: positive definite symmetric matrix representing weight
N: any natural number

6. The estimation system according to claim 1, further comprising a parameter generation module configured to generate an optimal parameter of the control device by performing an iterative calculation using Newton's method based on Math 8,
wherein the control object is controlled by the control device in which a control parameter is adjusted to the optimal parameter. [Math 8] ${θ}_{m + 1} = {θ}_{m} - H {\left({θ}_{m}\right)}^{- 1} \frac{\partial J \left({θ}_{m}\right)}{\partial θ}$
θ: parameter vector of control device
H: Hessian matrix
m: number of types of input data
J: objective function

7. The estimation system according to claim 1, further comprising a parameter generation module configured to generate an optimal parameter of the control device based on Math 9,
wherein the control object is controlled by the control device in which a control parameter is adjusted to the optimal parameter. [Math 9] ${θ}^{∗} = {\left({\sum }_{k = 0}^{N - 1} {\hat{y}}_{o 0} {\left(k\right)}^{T} W {\hat{y}}_{o 0} \left(k\right)\right)}^{†} {\sum }_{k = 0}^{N - 1} {\hat{y}}_{o 0} {\left(k\right)}^{T} W {y}_{od} \left(k\right)$
θ*: optimal parameter
θ: parameter vector of control device
y hatₒ₀: estimated output data of reference model represented in time domain
y_{d}: any reference trajectory of output data
W: positive definite symmetric matrix representing weight
N: any natural number

8. An estimation system for estimating an output of a control object based on experimental data acquired by a closed-loop control system that outputs output data corresponding to input data from a control device to the control object and feeds back the output data to the control device, the estimation system comprising:
an experimental data storage unit configured to store the experimental data;
an input module configured to receive an input of any input data; and
a calculation module configured to calculate an estimated output data based on a calculation expression using input data in a time domain as a variable, the input data in the time domain being obtained by performing a time-domain convolution operation on an intermediate variable introduction expression regarding the input data into which an intermediate variable represented by an r-dimensional vector is introduced, where "r" is the number of experiments.

9. The estimation system according to claim 8, wherein the number of types of the any input data input to the control object is two or more.

10. The estimation system according to claim 8 or 9, further comprising a parameter generation module configured to generate an optimal parameter of the control device based on the estimated output data,
wherein the control object is controlled by the control device in which a control parameter is adjusted to the optimal parameter.
